# EUROPEAN PATENT APPLICATION

(11) **EP 1 661 942 A1**
(43) Date of publication of application: **31.05.2006**
(21) Application number: 04786425.1
(22) Date of filing: 25.08.2004
(51) Int. Cl.: C08J 9/24, C08J 9/04, C08J 9/26, C08J 3/16

(54) **MIXED POLYTETRAFLUOROETHYLENE POWDER, POLYTETRAFLUOROETHYLENE POROUS SHAPED BODY, METHODS FOR PRODUCING THOSE, POLYTETRAFLUOROETHYLENE POROUS FOAM SHAPED BODY, AND PRODUCT FOR HIGH-FREQUENCY SIGNAL TRANSMISSION**

(30) Priority: 25.08.2003 JP 2003300640
(71) Applicant: DAIKIN INDUSTRIES, LTD., Osaka-shi, Osaka 530-8323 (JP)
(72) Inventor: SAWADA, Yasuhiko, c/o DAIKIN INDUSTRIES, LTD., Settsu-shi, Osaka 5668585 (JP); YOSHIMOTO, Hiroyuki, c/o DAIKIN INDUSTRIES, LTD., Settsu-shi, Osaka 5668585 (JP); KASAI, Shunji, c/o DAIKIN INDUSTRIES, LTD., Settsu-shi, Osaka 5668585 (JP); TAGASHIRA, Shuji, c/o DAIKIN INDUSTRIES, LTD., Settsu-shi, Osaka 5668585 (JP)
(74) Representative: HOFFMANN EITLE
(86) International application number: PCT/JP2004/012212
(87) International publication number: WO 2005/019320

(57) **Abstract**

The present invention provides a porous polytetrafluoroethylene molded article, wherein the specific gravity of the above porous polytetrafluoroethylene molded article is 0.9 to 2.0 and the aspect ratio of a void formed within the above molded article is not lower than 1 but not higher than 3.

## Description

### TECHNICAL FIELD

This invention relates to a mixed polytetrafluoroethylene powder and a porous polytetrafluoroethylene molded article, methods of producing them, a foamed porous polytetrafluoroethylene molded article, and a product for high-frequency signal transmission.

### BACKGROUND ART

In producing coaxial cables, cables for LAN, printed wiring board and like products for high-frequency signal transmission, it is required to use an insulating material as low as possible in permittivity (ε) so that the transmission rate may be increased and the dielectric loss may be reduced. Desirably, a fluororesin is used as the resin constituting the insulating material since it is low in permittivity and in dielectric loss tangent (tanδ) as well and can contribute to the reduction in dielectric loss and, further, is excellent in thermal stability and other characteristics.

It is known that a substance lower in permittivity than the insulator-constituting resin, when dispersed in that resin, is effective in reducing the permittivity of the insulating material. Air is suited for use as the low-permittivity substance to be dispersed in the resin.

The art has attempted to use a melt-processable fluororesin, which has good moldability, as the insulator-constituting fluororesin. Thus, for example, an electric wire coated with a foamed resin comprising a tetrafluoroethylene/hexafluoropropylene copolymer [FEP] has been proposed as a product comprising a melt-processable fluororesin with air dispersed therein (cf. e.g. Patent Document 1: WO 03/00792).

With the advances in high-frequency signal transmission technology in recent years, the demands for higher speed transmission and reduced dielectric losses have been increasing. Therefore, moldings produced by using a polytetrafluoroethylene resin, which is lower in permittivity and dielectric loss tangent than such a melt-processable fluororesin as mentioned above, are now under investigation as an insulating material.

A coaxial cables obtained by extrusion of a mixture of a foamed polytetrafluoroethylene powder, a pore-forming agent, an expanding agent and a lubricant has been proposed as one in which a polytetrafluoroethylene resin is used as the insulating material (cf. e.g. Patent Document 2: Japanese Kokai Publication S60-93709). However, there is no description at all about the method of preparing the foamed polytetrafluoroethylene, among others. Thus, it is considered that no satisfactory moldings can be obtained in reality or the insulator will have a finely split surface.

A molded article produced by sintering a preformed article by compression molding using, as the resin, a sintered polytetrafluoroethylene powder or a mixture of a sintered polytetrafluoroethylene powder and 1% by weight of a tetrafluoroethylene/perfluoro(vinyl ether) copolymer [PFA] powder has been proposed as a polytetrafluoroethylene resin-based porous body (cf. e.g. Patent Document 3: Japanese Kokai Publication S61-66730).

However, this polytetrafluoroethylene resin-based porous body is produced using a powder of polytetrafluoroethylene sintered and cured in advance, carrying out the molding in the preforming step under such a pressure that will not completely break the powder particles, and causing the particles to be bonded at the points of contact among them by sintering and, in this respect, the relevant technology is entirely different in technical idea from the present invention described later herein.

### DISCLOSURE OF INVENTION

### PROBLEMS WHICH THE INVENTION IS TO SOLVE

In view of the above-discussed state of the art, it is an object of the present invention to provide a porous polytetrafluoroethylene molded article or foamed porous polytetrafluoroethylene molded article with minute bubbles being uniformly distributed therein, a mixed polytetrafluoroethylene powder capable of giving such molded article, and a product for high-frequency signal transmission.

### MEANS FOR SOLVING THE PROBLEMS

The present invention provides a porous polytetrafluoroethylene molded article, wherein the specific gravity of the above porous polytetrafluoroethylene molded article is 0.9 to 2.0 and the aspect ratio of a void formed within the above molded article is not lower than 1 but not higher than 3.

The present invention provides a mixed polytetrafluoroethylene powder, which comprises a polytetrafluoroethylene resin (A) having a maximum peak temperature of 333 to 347ºC on the endothermic curve appearing on the crystal melting curve measured by a differential scanning calorimeter and a standard specific gravity of 2.12 to 2.20 and a polytetrafluoroethylene resin (B) having a maximum peak temperature of 324 to 330ºC on the endothermic curve appearing on the crystal melting curve measured by said differential scanning calorimeter and a standard specific gravity of 2.12 to 2.20.

The present invention provides a porous polytetrafluoroethylene molded article obtained by using the above mentioned mixed polytetrafluoroethylene powder, wherein the specific gravity of the above porous polytetrafluoroethylene molded article is 0.9 to 2.0 and the aspect ratio of a void formed within the above molded article is not lower than 1 but not higher than 3.

The present invention provides a method of producing the above mentioned porous polytetrafluoroethylene molded article comprising carrying out a molding processing using a mixed polytetrafluoroethylene powder, wherein the above mixed polytetrafluoroethylene powder comprises a polytetrafluoroethylene resin (A) having a maximum peak temperature of 333 to 347ºC on the endothermic curve appearing on the crystal melting curve measured by a differential scanning calorimeter and a standard specific gravity of 2.12 to 2.20 and a polytetrafluoroethylene resin (B) having a maximum peak temperature of 324 to 330ºC on the endothermic curve appearing on the crystal melting curve measured by the above differential scanning calorimeter and a standard specific gravity of 2.12 to 2.20, the above molding processing comprises a step of sintering at a temperature not lower than the melting point of said polytetrafluoroethylene resin (A).

The present invention provides a foamed porous polytetrafluoroethylene molded article comprising a polytetrafluoroethylene resin (P) and a thermoplastic resin (Q) having a melt viscosity at 350ºC of not higher than 5000000 Pa·s, wherein the specific gravity of the above foamed porous polytetrafluoroethylene molded article is 0.8 to 1.9 and the aspect ratio of a void formed within the above molded article is not lower than 1 but not higher than 3.

The present invention also provides a method of producing the above mentioned foamed porous polytetrafluoroethylene molded article, wherein the above method of producing the foamed porous polytetrafluoroethylene molded article comprises carrying out a molding processing using the polytetrafluoroethylene resin (P) and the thermoplastic resin (Q) having a melt viscosity at 350ºC of not higher than 5000000 Pa·s at a temperature not lower than the melting point of the above polytetrafluoroethylene resin (P).

The present invention provides a product for high-frequency signal transmission, which is obtained by using the above mentioned porous polytetrafluoroethylene molded article or the above mentioned foamed porous polytetrafluoroethylene molded article.

The present invention provides a filter, which is obtained by using the above-mentioned porous polytetrafluoroethylene molded article.

In the following, the present invention is described in detail.

The porous polytetrafluoroethylene molded article according to the invention has a specific gravity of 0.9 to 2.0.

The "porous polytetrafluoroethylene molded article" so referred to herein is a molded article obtained by using a polytetrafluoroethylene resin.

The porous polytetrafluoroethylene molded article is preferably a molded article obtained by using a polytetrafluoroethylene resin alone as the resin component, among others.

As the polytetrafluoroethylene resin, there may be mentioned those given later herein as examples; among them, the tetrafluoroethylene resin (A) and tetrafluoroethylene resin (B) described later herein are preferred, and a resin composed of the tetrafluoroethylene resin (A) and tetrafluoroethylene resin (B) alone is more preferred.

A lower limit to the specific gravity of the porous polytetrafluoroethylene molded article of the invention is 1.2 from the mechanical strength viewpoint.

The porous polytetrafluoroethylene molded article of the invention has such a relatively low specific gravity as is within the above range because of the presence of a large number of bubbles; these bubbles make it possible to attain a low level of relative permittivity.

The term "specific gravity" as used herein means the value measured by the water displacement method according to ASTM D 792.

The aspect ratio of a void formed within the porous polytetrafluoroethylene molded article of the invention is not lower than 1 but not higher than 3.

A preferred upper limit to the above-mentioned aspect ratio is 2 from the mechanical strength viewpoint.

The aspect ratio can be determined by measuring the longest void diameter and the shortest void diameter in an arbitrary cross section of the porous polytetrafluoroethylene molded article of the invention.

When the aspect ratio is within the above range, the porous polytetrafluoroethylene molded article of the invention is high in mechanical strength.

The porous polytetrafluoroethylene molded article of the invention whose specific gravity and aspect ratio are within the respective ranges mentioned above is low in relative permittivity and dimensional stability and, therefore, can be adequately used as a material in products for high-frequency signal transmission.

The mixed polytetrafluoroethylene powder of the invention comprises the polytetrafluoroethylene resin (A) and polytetrafluoroethylene resin (B).

The polytetrafluoroethylene (A) has a maximum peak temperature on the endothermic curve as appearing in the crystal melting curve measured using a differential scanning calorimeter (such temperature being hereinafter sometimes referred to as "maximum endothermic peak temperature") which temperature is 333 to 347ºC, and the polytetrafluoroethylene resin (B) has a maximum endothermic peak temperature of 324 to 330ºC. The polytetrafluoroethylene resin (A) and the polytetrafluoroethylene resin (B) are thus distinguished in this difference in maximum endothermic peak temperature. As for the polymer-constituting monomer composition, average molecular weight and other characteristics, they may be the same or different.

When the term "polytetrafluoroethylene resin" is used herein without adding (A) or (B), both the above-defined (A) and (B) can be included under the term without distinguishing from each other.

The polytetrafluoroethylene resin, when first heated in the form of a powder obtained by drying the wet powder as produced by polymerization, generally shows a maximum endothermic peak temperature (hereinafter sometimes referred to as "primary maximum endothermic peak temperature") of 333 to 347ºC and the same resin having a history of having been heated to a temperature above the primary maximum endothermic peak temperature, when subjected to the same measurement, shows a maximum endothermic peak temperature (hereinafter sometimes referred to as "secondary maximum endothermic peak temperature") of 324 to 330ºC.

The polytetrafluoroethylene resin (A) has a maximum endothermic peak temperature, namely a primary maximum endothermic peak temperature, of 333 to 347ºC and, therefore, it is a polytetrafluoroethylene resin having no history of having been heated to a temperature above the primary maximum endothermic peak temperature.

The fact that a polytetrafluoroethylene resin has no history of having been heated to a temperature above the primary maximum endothermic peak temperature thereof is sometimes referred to herein by the term "non-sintered".

A more preferred lower limit to the maximum endothermic peak temperature of the polytetrafluoroethylene resin is 337ºC and a more preferred upper limit thereto is 343ºC.

The crystal-melting curve, so referred to herein, is the one measured under the temperature programming condition of 10ºC/minute.

The fluoropolymer constituting the polytetrafluoroethylene resin (A) may be a non-melt-processable tetrafluoroethylene [TFE] homopolymer or a copolymer of TFE and a minor component monomer other than TFE (hereinafter referred to as "modified polytetrafluoroethylene [modified PTFE]").

The minor component monomer may be, for example, a perfluoroolefin, perfluoro(alkyl vinyl ether), fluorinated cyclic monomer or perfluoroalkylethylene.

The perfluoroolefin includes, among others, hexafluoropropylene [HFP], the perfluoro(alkyl vinyl ether) includes, among others, perfluoro(methyl vinyl ether) and perfluoro(propyl vinyl ether), the fluorinated cyclic monomer includes, among others, fluorodioxole, and the perfluoroalkylethylene includes, among others, perfluoromethylethylene.

The content of the minor component monomer units derived from the above-mentioned minor component monomer in all monomer units in the above-mentioned modified PTFE is generally within the range of 0.001 to 1 mole percent.

The term "minor component monomer units" as used herein means a part of the molecular structure of the fluoropolymer and is the moiety derived from the corresponding monomer. For example, the TFE unit is a part of the molecular structure of the polymer and the moiety derived from TFE and is represented by -(CF₂-CF₂)-.

The above-mentioned "all monomer units" are all monomer-derived moieties included in the molecular structure of the polymer

The phrase "content (mole percent) of the minor component monomer units derived from the above-mentioned minor component monomer in all monomer units" means the mole fraction (mole percent) of the minor component monomer, from which the minor component monomer units are derived, relative to the monomers from which the above-mentioned "all monomer units" are derived, namely all the monomers that have participated in constituting the polymer.

Although the moldability of the modified PTFE becomes improved as the minor component monomer unit content in all monomer units increases, a low content is preferred since it renders the relative permittivity and dielectric loss tangent of the porous article reduced. A preferred upper level to the above-mentioned content is 0.1 mole percent.

Preferred as the fluoropolymer constituting the polytetrafluoroethylene resin (A) is a TFE homopolymer since the molded articles obtained using the same can have low levels of relative permittivity and dielectric loss tangent.

The polytetrafluoroethylene resin (A) preferably has a standard specific gravity [SSG] of not higher than 2.2, generally within the range of 2.12 to 2.20.

In view of the mechanical strength and electric characteristics of the molded articles obtained, a preferred lower limit to the SSG is 2.13, a more preferred lower limit is 2.15, a still more preferred lower limit is 2.17 and, from the moldability viewpoint, a more preferred upper limit is 2.19.

The "SSG (standard specific gravity)" so referred to herein is the value measured by the water displacement method according to ASTM D 792 using samples molded in accordance with ADTM D 4895-98.

The resin particles comprising the polytetrafluoroethylene resin (A) preferably have an average primary particle diameter of 0.1 to 0.5 *µ*m from the uniformity of cells and extent of foaming viewpoint. A more preferred lower limit to the average primary particle diameter is 0.2 *µ*m, and a still more preferred upper limit is 0.3 *µ*m.

The "primary particle diameter", so referred to herein, is the value obtained by measurement by the gravity sedimentation method.

The polytetrafluoroethylene resin (A) can be produced by such a conventional method as emulsion polymerization or suspension polymerization; the one obtained by emulsion polymerization is preferred, however, since the paste extrusion on the occasion of extrusion for coating electric wires or of tube extrusion, for instance, is easy with the same.

The polytetrafluoroethylene resin (B) shows a maximum peak temperature (maximum endothermic peak temperature) of 324 to 330ºC as found on the endothermic curve appearing on the crystal melting curve measured using a differential scanning calorimeter.

The maximum endothermic peak temperature of the polytetrafluoroethylene resin (B) is the one whose maximum endothermic peak temperature is the secondary maximum endothermic peak temperature of the above-mentioned polytetrafluoroethylene resin and, therefore, is a polytetrafluoroethylene resin having a history of having been heated at the primary maximum endothermic peak temperature of the polytetrafluoroethylene resin or above.

A preferred lower limit to the above-mentioned maximum endothermic peak is 325ºC, and a preferred upper limit thereto is 327ºC.

So long as the polytetrafluoroethylene resin (B) shows a maximum endothermic temperature within the above range, the fluoropolymer constituting the polytetrafluoroethylene resin (B) may be a TFE homopolymer or such a modified PTFE as mentioned above, like in the case of the polytetrafluoroethylene resin (A). It is preferably a TFE homopolymer, however, in view of the low relative permittivity and dielectric loss tangent of the resulting molded articles.

The polytetrafluoroethylene resin (B) preferably has a standard specific gravity of not higher than 2.2, generally a standard specific gravity within the range of 2.12 to 2.20. A preferred lower limit to the standard specific gravity is 2.13, a more preferred lower limit is 2.14, and a preferred upper limit thereto is 2.18.

The standard specific gravity so referred to herein is the value measured by the water displacement method according to ASTM D 792 using a sample molded in accordance with ASTM D 4895-98.

The polytetrafluoroethylene resin (B) can be obtained by carrying out (1) the step of preparing a powder comprising a polytetrafluoroethylene resin by polymerization, (2) the step of subjecting the same to heat treatment at a temperature not lower than the primary maximum endothermic peak temperature of the polytetrafluoroethylene resin, generally at a temperature not lower than 333ºC, followed by cooling, and (3) the step of mechanically grinding the same, in that order.

In the above step (1), the polymerization can be carried out by using any of the polymerization methods known in the art, for example by emulsion polymerization, suspension polymerization or solution polymerization. Preferred, however, is the product obtained by emulsion polymerization since the use thereof facilitates the paste extrusion on the occasion of extrusion for coating electric wires or of tube extrusion.

The powder preparation in the above step (1) can be carried out by an appropriate known method selected according to the method of polymerization employed.

The powder comprising the polytetrafluoroethylene resin as obtained in the above-mentioned step (1) may be a fine powder obtained via emulsion polymerization or a molding powder obtained via some other polymerization method than emulsion polymerization and, a fine powder is preferred when the paste extrusion to be mentioned later herein, though depending on the use of the mixed polytetrafluoroethylene powder to be obtained.

In the step (2) mentioned above, a preferred lower limit to the temperature at which the above-mentioned heat treatment is carried out is 340ºC, more preferably 360ºC, since the polytetrafluoroethylene resin can be melted sufficiently, whereas the upper limit may be a temperature lower than the decomposition temperature of the polytetrafluoroethylene resin but preferably 400ºC, more preferably 390ºC, from the energy efficiency viewpoint.

The heating time can be adequately selected according to the amount of the powder. The heating may be carried out on a tray or on a conveyor.

The heat treatment is preferably carried out, for example, by placing the polytetrafluoroethylene on a heat-resistant container, such as a stainless vat, to a thickness of about 20 mm, without loading.

The polytetrafluoroethylene resin (B) is the one obtained after heat treatment in the above-mentioned step (2) and, therefore, has the above-mentioned maximum endothermic peak temperature.

The method of mechanical grinding in the above step (3) is not particularly restricted but may be the method comprising effecting the grinding using such a conventional grinder as a mixer.

The powder comprising polytetrafluoroethylene resin (B) as obtained by mechanical grinding in the above step (3) preferably has an average particle diameter not greater than 500 *µ*m.

From the viewpoint that the reduction in density of the porous molded article to be obtained can be facilitated, a lower limit to the above-mentioned average particle diameter is 10 *µ*m, a more preferred lower limit is 30 *µ*m and, from the view point that bubbles can be easily distributed in the porous molded article to be obtained, a more preferred upper limit is 300 *µ*m, a still more preferred upper limit is 100 *µ*m or below.

The mixed polytetrafluoroethylene powder of the invention can be obtained, for example, by mixing an aqueous dispersion of a particle comprising the polytetrafluoroethylene resin (A) dispersed in an aqueous medium or a powder comprising the polytetrafluoroethylene resin (A) with a powder comprising the polytetrafluoroethylene (B).

Preferred as the method of mixing, the dry mixing method (i) which comprises mixing a powder comprising the polytetrafluoroethylene resin (A) with a powder comprising the polytetrafluoroethylene resin (B) in view of the operational simplicity and the possibility of obtaining a low-density mixed polytetrafluoroethylene powder while the cocoagulation method (ii) which comprises cocoagulation of an aqueous dispersion of a particle comprising the polytetrafluoroethylene resin (A) dispersed in an aqueous medium and a powder comprising the polytetrafluoroethylene resin (B) in view of the fact that porous molded articles containing bubbles uniform and small in diameter can then be obtained with ease.

In the case of obtaining the mixed polytetrafluoroethylene powder of the invention by the above dry mixing method (i), the powder comprising the polytetrafluoroethylene (A) is preferably subjected in advance, prior to the mixing with a powder comprising the polytetrafluoroethylene resin (B), to grinding using a Henschel mixer, for instance, for attaining a certain degree of fibrillation so that the mixing of the powder comprising the polytetrafluoroethylene resin (A) with the powder comprising the polytetrafluoroethylene (B) may be facilitated.

The content of the polytetrafluoroethylene resin (B) in the mixed polytetrafluoroethylene powder of the invention is preferably 30 to 80% by mass relative to the sum of the polytetrafluoroethylene resin (A) and polytetrafluoroethylene resin (B).

When that content is lower than 30% by mass, the amount of bubbles formed in the porous molded article obtained by using the mixed polytetrafluoroethylene powder will become small and therefore the relative permittivity will be reduced only to an insufficient extent and, when it is above 80% by mass, the mechanical strength of the porous molded article obtained may become poor.

A more preferred lower limit to the content of the polytetrafluoroethylene resin (B) is 40% by mass, a more preferred lower limit is 50% by mass, and a more preferred upper limit is 70% by mass and a still more preferred upper limit is 60% by mass.

The mixed polytetrafluoroethylene powder of the invention may further contain, in addition to the polytetrafluoroethylene resin (A) and polytetrafluoroethylene resin (B), one or more additives known in the art, for example a nucleating agent, an antioxidant and so forth, according to the intended use thereof.

The mixed polytetrafluoroethylene powder of the invention can be used as a molding material and particularly suited for use as a molding material for obtaining porous molded article with a large number of bubbles distributed therein, although the use of the powder is not particularly restricted.

The mixed polytetrafluoroethylene powder of the invention, when subjected to molding processing by heating to a temperature not lower than the primary maximum endothermic peak temperature of the polytetrafluoroethylene resins, can give porous molded article.

Among the powder particles constituting the mixed polytetrafluoroethylene powder, the powder particles comprising the polytetrafluoroethylene resin (B) once subjected to heat treatment in the above-mentioned step (2) hardly shrink and the volume occupied by each of the powder particles comprising the polytetrafluoroethylene resin (B) hardly decreases in the step of molding of the mixed polytetrafluoroethylene powder of the invention even when it is heated to a temperature not lower than the secondary maximum endothermic peak temperature.

On the other hand, the particles comprising the polytetrafluoroethylene resin (A) having no history of being heated to a temperature not lower than the primary maximum endothermic peak temperature reduce their volume generally by about 30% due to shrinking upon heating to a temperature not lower than the primary maximum endothermic peak temperature of the polytetrafluoroethylene resin in the step of molding, although the extent of shrinkage may vary depending on the heating time and other factors.

When the mixed polytetrafluoroethylene powder of the invention is subjected to molding processing at a temperature not lower than the primary maximum endothermic peak temperature of the polytetrafluoroethylene resin so that the difference in shrinkability upon heating between the particles comprising the polytetrafluoroethylene resin (A) and the particles comprising the polytetrafluoroethylene resin (B) may be utilized, the polytetrafluoroethylene resin (B) hardly shrinks whereas the shrinkage of the polytetrafluoroethylene resin (A) causes the formation of bubbles in the molded article; as a result, a porous molded article can be obtained.

The mixed polytetrafluoroethylene powder of the invention comprises the polytetrafluoroethylene resin (A) and polytetrafluoroethylene resin (B) showing no substantial great differences in chemical properties except for the difference in maximum endothermic peak temperature and, therefore, sufficient mixing can be attained between both resins and the molded article obtained can be a porous molded article with bubbles uniformly distributed therein owing to the uniform distribution of the polytetrafluoroethylene resin (A).

The mixed polytetrafluoroethylene powder of the invention comprises such polytetrafluoroethylene resins and, therefore, molded articles low in relative permittivity and dielectric loss tangent can be obtained therefrom and, further, porous molded articles sufficiently reduced in relative permittivity can be obtained owing to the fact that they contain bubbles resulting from the shrinkage of the polytetrafluoroethylene resin (A).

The porous polytetrafluoroethylene molded article of the invention may be a porous molded article obtained by using the mixed polytetrafluoroethylene powder of the invention, the specific gravity of the porous polytetrafluoroethylene molded article may be 0.9 to 2.0 and the aspect ratio of a void formed within the molded article may be not lower than 1 but not higher than 3.

Among the porous polytetrafluoroethylene molded articles of the invention, the porous molded article obtained by using the above-mentioned mixed polytetrafluoroethylene powder is hereinafter sometimes referred to as "porous polytetrafluoroethylene molded article (C) of the invention".

The porous polytetrafluoroethylene molded article (C) of the invention is generally obtained by molding processing by sintering at a temperature not higher than the melting point of the polytetrafluoroethylene resin (A).

The porous polytetrafluoroethylene molded article (C) of the invention is a product obtained by utilizing the fact that the non-sintered polytetrafluoroethylene resin (A) shrinks and, accordingly, the standard specific gravity increases from about 1.5 to about 2.15 upon heating at a temperature not lower than the above-mentioned primary maximum endothermic peak temperature while the polytetrafluoroethylene resin (B) having a history of being heated to a temperature not lower than the primary maximum endothermic peak temperature shows almost no change in standard specific gravity upon resintering and, therefore, it is a porous molded article containing a large number of bubbles formed as a result of shrinkage of the polytetrafluoroethylene (A).

The porous polytetrafluoroethylene molded article (C), which comprises a polytetrafluoroethylene resin, is low in relative permittivity and dielectric loss tangent.

The porous polytetrafluoroethylene molded article of the invention, which comprises a polytetrafluoroethylene resin, is fairly low in relative permittivity.

The relative permittivity (εᵣ) of the porous polytetrafluoroethylene molded article can be within the range of 1.2 to 1.8. A more preferred lower limit to the relative permittivity is 1.7, and a more preferred upper limit thereto is 1.6.

The porous polytetrafluoroethylene molded article of the invention preferably has a dielectric loss tangent, expressed in terms of tanδ, of not higher than 1.5 x 10⁻⁴. A preferred upper limit to the dielectric loss tangent is 0.8 x 10⁻⁴, and a more preferred upper limit is 0.7 x 10⁻⁴.

The dielectric loss tangent and relative permittivity, so referred to herein, are obtained by measuring the changes in resonance frequency and electric field strength using a network analyzer at a temperature of 20 to 25ºC and calculating the values at 12 GHz.

The porous polytetrafluoroethylene molded article of the invention is low in relative permittivity and dielectric loss tangent and, therefore, can be suitably used as a product for high-frequency signal transmission which is required to be high in transmission rate and low in dielectric loss.

The porous polytetrafluoroethylene molded article of the invention is low in relative permittivity and dielectric loss tangent and, therefore, is preferably used as an insulator, more preferably as an insulator in a product for high-frequency signal transmission.

The porous polytetrafluoroethylene molded article of the invention, when used as an insulator in a product for high-frequency signal transmission, can make it possible to increase the rate of transmission of high-frequency signals. The rate of transmission is expressed in terms of the value obtained by dividing the speed of light by the square root of the relative permittivity (εᵣ). Since the porous polytetrafluoroethylene molded article of the invention is sufficiently low in relative permittivity, an increase in rate of transmission can be accomplished.

The porous polytetrafluoroethylene molded article of the invention, when used, for example, as an insulator in a high-frequency transmission cable, which is to be described later herein, makes it possible to reduce the dielectric loss and transmission loss and, thus, it is suited for use as an insulator, in particular an insulator in various products for high-frequency signal transmission such as high-frequency transmission cables.

The transmission loss generally includes two classes, namely the one due to conductor loss and the one due to dielectric loss. The dielectric loss α_{K} is expressed as a function of the relative permittivity and dielectric loss tangent, as shown by the general formula given below, and the porous polytetrafluoroethylene molded article of the invention is low in relative permittivity and dielectric loss tangent and is therefore low in dielectric loss.
(Dielectric loss α_{K}) = K. (εᵣ)^{½}·tanδ·f (dB/m)
K: constant; εᵣ: relative permittivity; f: frequency

The above-mentioned various products for high-frequency signal transmission are not particularly restricted but may be those products which are used for high-frequency signal transmission, including, among others, (I) insulating boards of high-frequency circuits, terminal boards of electric parts, insulators in connecting parts and printed wiring boards and like molded boards, (II) high-frequency vacuum tube bases, antenna covers and like molded products, and (III) insulated wires such as high-frequency transmission cables and coaxial feeders.

Among the molded boards (I) mentioned above, printed wiring boards are preferred since the good electric characteristics and thermal stability of the porous polytetrafluoroethylene molded article of the invention can be utilized therein.

The printed wiring boards are not particularly restricted but include, among others, printed wiring boards for electronic circuits for use in cellular phones, various computers, communication devices and so forth.

Among the above-mentioned molded products (II), antenna covers are preferred from the viewpoint that the transmission loss is low and the weather resistance and mechanical strength as well as the good electric characteristics can be made the most of.

The method of molding processing into the molded boards (I) or molded products (II) is not particularly restricted but mention may be made of, for example, the method comprising subjecting the mixed polytetrafluoroethylene powder, optionally after mixing with one or more of the processing aids known in the art, to compression molding or extrusion rolling molding, for instance.

High-frequency transmission cables are preferred as the above-mentioned insulated wires (III) from the viewpoint that the good electric characteristics and thermal stability can be utilized, and coaxial cables and cables for LAN, among others, are preferred as the high-frequency transmission cables.

The coaxial cables generally have a structure such that it results from lamination of an inner conductor, insulating coating layer, outer conductor layer and protective coating layer in that order from the central portion toward the periphery. The thickness of each layer in the above structure is not particularly restricted but, generally, the inner conductor has a diameter of about 0.1 to 3 mm, the insulating coating layer has a thickness of about 0.3 to 3 mm, the outer conductor layer has a thickness of about 0.5 to 10 mm, and the protective coating layer has a thickness of about 0.5 to 2 mm.

The high-frequency transmission cables can be produced in the conventional manner, for example, by the method described in Japanese Kokai Publication 2001-357729, or by the method described in Japanese Kokai Publication H09-55120.

The high-frequency transmission cables generally comprise the above-mentioned porous polytetrafluoroethylene molded article as the insulating coating layer.

The method of molding processing to adapt the porous polytetrafluoroethylene molded article of the invention to the insulating coating layer is not particularly restricted but includes, among others, the extrusion coating molding technique, tape wrapping technique, and calendering rolling technique.

Among such molding processing techniques, the extrusion coating molding technique is preferred, and the extrusion coating molding technique is preferably carried out in the manner of paste extrusion molding.

As a method of paste extrusion molding, there may be mentioned, for example, the method comprising admixing a paste extrusion auxiliary with the above-mentioned mixed polytetrafluoroethylene powder, feeding the resulting mixture to a paste extruder, extruding the mixture so as to coat the core wire and, after heating for dying at a temperature of 100 to 250ºC, subjecting the whole to heat treatment at a temperature not lower than the melting point of the polytetrafluoroethylene resin (A) for sintering.

The porous polytetrafluoroethylene molded article of the invention is a porous molded article with minute bubbles distributed therein and, therefore, can be used as a filter.

The filter may be one required to have such an electric characteristic as low relative permittivity or may be one not required such a characteristic. It can serve as a filter suited for some or other intended use where the properties of the porous polytetrafluoroethylene molded article such that it allows the permeation of air but hardly allows the permeation of water are utilized. As such filter, there may be mentioned a terminal portion waterproofing cap for an electronic device, for instance.

The porous polytetrafluoroethylene molded article of the invention can be subjected to expanding or compression to reduce the bubble size to give a filter suited for the intended use.

The method of producing porous polytetrafluoroethylene molded articles according to the invention comprises carrying out a molding processing using the above-mentioned mixed polytetrafluoroethylene powder.

The above-mentioned molding processing comprises a step of sintering at a temperature not lower than the melting point of the polytetrafluoroethylene resin (A) (hereinafter sometimes referred to as "sintering step").

The above sintering step is generally carried out after the step of molding the above-mentioned mixed polytetrafluoroethylene powder into a predetermined shape (hereinafter sometimes referred to as "shape providing step").

The method of molding processing the mixed polytetrafluoroethylene powder is not particularly restricted provided that it comprises the above-mentioned sintering step. It may comprise, for example, such a shape providing step known in the art as compression molding, extrusion calendering molding, extrusion coating molding technique, tape wrapping technique, calendering technique, according to the intended use of the porous polytetrafluoroethylene molded article.

The molding processing may be carried out after addition of one or more of the processing aids known in the art to the mixed polytetrafluoroethylene powder for the purpose of improving the moldability/processability and the physical properties, for example the mechanical strength, of the molded article obtained.

From the good molding processability viewpoint, the paste extrusion molding is preferred as the above-mentioned molding processing method.

On the occasion of molding the mixed polytetrafluoroethylene powder by paste extrusion, the particles comprising the polytetrafluoroethylene resin (A) are fibrillated and molded into a desired shape while entangling the polytetrafluoroethylene resin (B), so that the porous polytetrafluoroethylene molded article obtained is improved in mechanical strength.

In the case of paste extrusion molding of the mixed polytetrafluoroethylene powder, the extrusion molding is followed by drying for evaporating off the extrusion auxiliary in a drying oven, which is further followed by sintering.

The method of the drying mentioned above is not particularly restricted but, for example, there may be mentioned the method of drying at 100 to 200ºC in a drying oven.

The sintering is preferably carried out in the manner of heat treatment at 350 to 450ºC.

The foamed porous polytetrafluoroethylene molded article of the invention comprises a polytetrafluoroethylene resin (P) and a thermoplastic resin (Q), the specific gravity of the foamed porous polytetrafluoroethylene molded article is 0.8 to 1.9 and the aspect ratio of a void formed within the molded article is not lower than 1 but not higher than 3.

From the viewpoint of reduction in relative permittivity, the specific gravity is preferably not higher than 1.7 and more preferably not higher than 1.6 and, from the mechanical strength viewpoint, it is preferably not lower than 0.9.

The preferred range of the aspect ratio is the same as the range described hereinabove referring to the porous polytetrafluoroethylene molded article of the invention.

The foamed porous polytetrafluoroethylene molded article of the invention has a specific gravity and aspect ratio within the respective ranges mentioned above and, therefore, is low in relative permittivity and excellent in dimensional stability, so that it can be suitably used as a material for products for high-frequency signal transmission.

The polytetrafluoroethylene resin (P) is preferably one having a maximum peak temperature of 320 to 345ºC on the endothermic curve appearing on the crystal melting curve measured by a differential scanning calorimeter (such temperature is hereinafter sometimes referred to as "maximum endothermic peak temperature").

From the viewpoint of moldability on the occasion of molding processing, a more preferred lower limit to the maximum endothermic peak temperature of the polytetrafluoroethylene resin (P) is 337ºC and a more preferred upper limit is 343ºC.

The polytetrafluoroethylene resin (P) may be one having no history of being heated to a temperature not lower than the primary maximum endothermic peak temperature of the polytetrafluoroethylene resin or may be one having such history. A non-sintered one is preferred, however, in view of better pore formation in the foamed porous polytetrafluoroethylene molded article of the invention.

The fluoropolymer constituting the polytetrafluoroethylene resin (P) may be a tetrafluoroethylene [TFE] homopolymer or the above-mentioned modified polytetrafluoroethylene [modified PTFE].

A TFE homopolymer is preferred as the polytetrafluoroethylene resin (P) from the viewpoint that the relative permittivity and dielectric loss tangent of the molded article obtained from the above molding material can be reduced.

The polytetrafluoroethylene resin (P) preferably has a standard specific gravity (SSG) of not higher than 2.2.

From the viewpoint of the mechanical strength and electric characteristics of the foamed porous polytetrafluoroethylene molded article obtainable, a preferred lower limit to the SSG is 2.12, a more preferred lower limit is 2.13, a still more preferred lower limit is 2.15, a particularly preferred lower limit is 2.17 and, from the moldability viewpoint, a more preferred upper limit is 2.19.

The resin particles comprising the polytetrafluoroethylene resin (P) generally have an average primary particle diameter of 0.1 to 0.5 *µ*m. A preferred lower limit to the average primary particle diameter is 0.2 *µ*m and a preferred upper limit thereto is 0.3 *µ*m.

The polytetrafluoroethylene resin (P) can be produced in the conventional manner, for example by emulsion polymerization or suspension polymerization. The one obtained by emulsion polymerization is preferred, however, since it facilitates paste extrusion on the occasion of extrusion for coating electric wires or tube extrusion, for instance.

The thermoplastic resin (Q) has a melt viscosity at 350ºC of not higher than 5000000 Pa·s.

From the mechanical strength viewpoint, a preferred upper limit to the melt viscosity is 80000 Pa·s, a more preferred upper limit is 60000 Pa·s, a preferred lower limit is 40000 Pa·s and a more preferred lower limit is 50000 Pa.s.

The melt viscosity, so referred to herein, is the value measured at 350ºC using Rheometrix model RDS-2 viscoelastometer as the dynamic viscoelasticity measuring apparatus.

Preferably, the thermoplastic resin (Q) has a melting point of not lower than 100ºC but lower than 330ºC. From the viewpoint of mechanical strength in practical use, the melting point of the thermoplastic resin (Q) is preferably not lower than 100ºC, more preferably not lower than 120ºC and, from the mechanical strength and moldability viewpoint, it is preferably not higher than 320ºC, more preferably not higher than 300ºC.

As for the measurement method, the melting point of the thermoplastic resin (Q) can be determined by measuring the endothermic peak under the temperature programming condition of 10ºC/minute using a differential scanning calorimeter.

Preferred as the thermoplastic resin (Q) is a fluororesin or a polyolefin resin.

The fluororesin may be, for example, a non-melt-processable fluororesin or a melt-processable fluororesin.

The polyolefin resin includes, among others, polyethylene resins and polypropylene resins, and polypropylene resins are preferred.

As the non-melt-processable fluororesin, there may be mentioned, for example, a low-molecular-weight polytetrafluoroethylene [PTFE] resin.

The low-molecular-weight PTFE resin is generally a PTFE resin having a number average molecular weight of 100 ± 50 x 10⁴, and the fluoropolymer constituting the PTFE resin may be the TFE homopolymer or modified PTFE mentioned above. From the viewpoint that the relative permittivity and dielectric loss tangent can be lowered, the TFE homopolymer is preferred. As the low-molecular-weight PTFE resin, there may be mentioned, for example, Lubron (trademark, product of Daikin Industries).

The number average molecular weight, so referred to herein, is the value calculated from the standard specific gravity [SSG] measured by the water displacement method according to ASTM D 792 using samples molded in accordance with ATSM D 4895-98.

As the melt-processable fluororesin, there may be mentioned, among others, fluororesins the constituent fluoropolymer of which is a tetrafluoroethylene/perfluoro(alkyl vinyl ether) [TFE/PAVE] copolymer, a tetrafluoroethylene/hexafluoropropylene [FEP] copolymer, a tetrafluoroethylene/ethylene [ETFE] copolymer or an ethylene/tetrafluoroethylene/hexafluoropropylene [EFEP] copolymer, for instance.

As the above-mentioned TFE/PAVE copolymer [PFA], there may be mentioned tetrafluoroethylene/perfluoro(methyl vinyl ether) copolymers [MFA] and tetrafluoroethylene/perfluoro(propyl vinyl ether) [TFE/PPVE] copolymers, among others.

The fluororesin as the thermoplastic resin (Q) can be produced in the conventional manner, for example by emulsion polymerization, suspension polymerization or solution polymerization. In cases where an aqueous dispersion of the fluororesin as the thermoplastic resin (Q) is used in the preparation of the molding material to be described later herein, however, the one polymerized by emulsion polymerization is preferred.

When it is the one polymerized by emulsion polymerization, the fluororesin as the thermoplastic resin (Q) generally has an average primary particle diameter of about 0.02 to 0.5 *µ*m, and a preferred lower limit to the average primary particle diameter is 0.1 *µ*m and a preferred upper limit is 0.3 *µ*m.

The olefin polymer constituting the polyolefin resin mentioned above may be an olefin homopolymer or a copolymer of an olefin serving as the principal monomer and other monomers copolymerizing with the olefin.

As the olefin copolymer, there may be mentioned, for example, propylene/ethylene-based copolymers resulting from random or blockwise copolymerization of propylene and ethylene.

Preferred as the thermoplastic resin (Q) is a fluororesin since foamed molded articles excellent in thermal stability and capable of being used stably even under relatively high temperatures can be obtained by using the same.

From the thermal stability viewpoint, the fluororesin is preferably a melt-processable fluororesin, and the melt-processable fluororesin is preferably a resin the constituent fluoropolymer of which is a FEP and TFE/PAVE copolymer. Preferred as the TFE/PAVE copolymer are MFA and TFE/PPVE copolymers.

The number average molecular weight of the thermoplastic resin (Q) is not particularly restricted but preferably is within the range of 1000 to 1000000. When the number average molecular weight is excessively high, the moldability may deteriorate and, when it is excessively low, the mechanical strength of the molded articles obtained may be decreased.

In the foamed porous polytetrafluoroethylene molded article of the invention, the polytetrafluoroethylene resin (P) preferably amounts to 1 to 95% by mass relative to the sum of the polytetrafluoroethylene (P) and the thermoplastic resin (Q).

A more preferred lower limit to the content of the polytetrafluoroethylene resin (P) is 20% by mass, a still more preferred lower limit is 30% by mass, and a more preferred upper limit is 70% by mass and a still more preferred upper limit is 50% by mass.

When the content of the polytetrafluoroethylene resin (P) is higher than 95% by mass, the extent of foaming in the molded article obtained from the molding material may lower in some instances and, when the content is below 5%, the relative permittivity and dielectric loss tangent may not be reduced significantly.

The foamed porous polytetrafluoroethylene molded article of the invention can be obtained by subjecting a molding material comprising the polytetrafluoroethylene resin (P) and thermoplastic resin (Q) to the process described later herein.

The material for the above molding processing is sometimes referred to herein as "molding material".

The molding material may be composed of the polytetrafluoroethylene resin (P) and thermoplastic resin (Q) alone or may be supplemented with one or more additives such as the foaming or blowing agent mentioned later herein.

The foamed porous polytetrafluoroethylene molded article of the invention may be one obtained by using a molding material comprising the polytetrafluoroethylene resin (P) and thermoplastic resin (Q) and, further, a foaming agent.

The foaming agent is not particularly restricted but may be any one capable of generating bubbles in the step of molding processing. For example, mention may be made of such decomposable compounds as carbonyl/sulfonyl hydrazides, azo compounds and inorganic compounds.

As the carbonyl/sulfonyl hydrazides, there may be mentioned 4,4'-oxybis(benzenesulfonyl hydrazide) and the like.

As the azo compounds, there may be mentioned, among others, azodicarbonamide and 5-phenyltetrazol.

The inorganic compounds include boron nitride, talc, sericite, diatomaceous earth, silicon nitride, fine silica, alumina, zirconia, powdered quartz, kaolin, bentonite, titanium oxide, etc.

The foaming agent is preferably added at a level of 0.1 to 5% by mass relative to the sum of the polytetrafluoroethylene resin (P) and thermoplastic resin (Q).

The level of addition of the blowing agent may vary depending on the blowing agent species selected but, from the foaming efficiency viewpoint, it is more preferably not lower than 0.5% by mass and, from the dielectric loss tangent viewpoint, it is more preferably not higher than 1% by mass.

As the method of preparing the above-mentioned molding material, there may be mentioned, for example, (i) the dry blending method which comprises blending a powder comprising the polytetrafluoroethylene resin (P) with a powder comprising the thermoplastic resin (Q). In the case of the thermoplastic resin (Q) being a resin other than any melt-processable fluororesin, namely a non-melt-processable fluororesin or a polyolefin resin, for instance, there may be mentioned (ii) the cocoagulation method which comprises adding a powder comprising either one of the polytetrafluoroethylene resin (P) and the thermoplastic resin (Q) other than any melt-processable fluororesin to an aqueous dispersion containing the other resin, followed by coagulation, and (iii) the cocoagulation method which comprises mixing an aqueous dispersion comprising the polytetrafluoroethylene resin (P) with an aqueous dispersion comprising the thermoplastic resin (Q) other than any melt-processable fluororesin, followed by coagulation.

Among them, the cocoagulation method (ii) or (iii) is preferred, and the cocoagulation method (iii) is more preferred, since thorough mixing can be attained and foamed molded articles uniform and excellent in mechanical strength and electric characteristics can be obtained with ease.

The dry blending method (i) and the cocoagulation method (ii) can be carried out in the same manner as described hereinabove referring to the mixed polytetrafluoroethylene powder of the invention.

The cocoagulation method (iii) mentioned above is not particularly restricted but the method which comprises mixing an aqueous dispersion of a particle comprising the polytetrafluoroethylene resin (P) just after polymerization with an aqueous dispersion of a particle comprising the thermoplastic resin (Q) other than any melt-processable fluororesin as obtained just after polymerization and subjecting the resulting mixture to cocoagulation by causing a coagulant such as an inorganic acid or a metal salt thereof to act on the mixture is preferred.

The average particle diameter of the particles comprising the polytetrafluoroethylene resin (P) and the average particle diameter of the particles comprising the thermoplastic resin (Q) are preferably almost equal to each other since then the polytetrafluoroethylene resin (P) and thermoplastic resin (Q) can be easily mixed up to a sufficient extent to give a uniform mixture.

When the molding material contains such a foaming agent as mentioned above, the foaming agent may be added at any time point in carrying out the above-mentioned method of preparation. For example, when the cocoagulation method (ii) or (iii) mentioned above is employed, the foaming agent may be added to the aqueous dispersion and subjected to cocoagulation together with the polytetrafluoroethylene resin (P) and the thermoplastic resin (Q) other than any melt-processable fluororesin.

The above molding material may comprise, in addition to the polytetrafluoroethylene resin (P) and thermoplastic resin (Q), one or more of additives such as extrusion auxiliaries known in the art for the purpose of improving the moldability and improving the mechanical strength and other physical properties of the foamed porous polytetrafluoroethylene molded article to be obtained.

The extrusion auxiliary is preferably used in particular when paste extrusion, which is to be described later herein, is carried out. It is preferably used in an amount of 10 to 25% by mass relative to the sum of the polytetrafluoroethylene resin (P) and thermoplastic resin (Q).

The foamed porous polytetrafluoroethylene molded article of the invention preferably has a dielectric loss tangent, expressed in terms of tanδ, of not higher than 5 x 10⁻⁴. A preferred upper limit to the dielectric loss tangent is 0.8 x 10⁻⁴ and a more preferred upper limit is 0.6 x 10⁻⁴.

The foamed porous polytetrafluoroethylene molded article of the invention generally has a relative permittivity (ε) of 1.2 to 1.8. From the transmission rate viewpoint, a preferred upper limit to the relative permittivity is 1.9.

A method of producing the foamed porous polytetrafluoroethylene molded article of the invention which comprises carrying out the molding processing using the polytetrafluoroethylene resin (P) and thermoplastic resin (Q) at a temperature not lower than the melting point of the polytetrafluoroethylene resin (P) also constitutes an aspect of the present invention.

Generally, the above-mentioned molding processing can be carried out using the molding material mentioned above.

The method of carrying out the molding processing using the molding material is not particularly restricted but such known techniques as compression molding, extrusion rolling molding, extrusion coating molding technique, wrapping tape technique and calendering rolling technique can be employed according to the intended use of the desired foamed porous polytetrafluoroethylene molded article.

Paste extrusion molding is preferred among others in view of the ease of molding processing.

In subjecting the above molding material to molding processing by paste extrusion molding, the polytetrafluoroethylene resin (P) is preferably subjecting to the molding processing in a non-sintered condition.

When heat treatment is carried out in the molding processing using the above molding material, the temperature at which the heat treatment is to be carried out may vary according to the polytetrafluoroethylene resin (P), thermoplastic resin (Q) and/or foaming agent species employed and may be a temperature not lower than the melting point of the thermoplastic resin (Q). From the viewpoint of the mechanical strength of the foamed porous polytetrafluoroethylene molded article to be obtained, the temperature is preferably not higher than the melting point of the polytetrafluoroethylene resin (P).

A more preferred lower limit to the temperature at which the heat treatment is carried out is 355ºC, a still more preferred lower limit is 360ºC, a particularly preferred lower limit is 370ºC, and a preferred upper limit is 400ºC and a more preferred upper limit is 390ºC.

In the heat treatment at a temperature not lower than the melting point of the thermoplastic resin (Q), the bubbles formed upon partial decomposition of the thermoplastic resin (Q) are made difficult to escape out of the molded article by the melted thermoplastic resin (Q) functioning as a barrier and, as a result, the above molding processing makes it possible to obtain the molded article with the remaining bubbles distributed therein.

When the molding material contains a foaming agent, the bubbles formed upon decomposition of the foaming agent can be confined in the foamed porous polytetrafluoroethylene molded article obtained in the same manner by the barrier action of the melted thermoplastic resin (Q).

The foamed porous polytetrafluoroethylene molded article obtained contains the bubbles formed at least upon partial decomposition of the thermoplastic resin (Q) as finely and uniformly distributed therein and, therefore, it is dimensionally stable, for example is stable in cord diameter, is stable in impedance and, further, is free of surface roughness.

Even if an attempt is made to obtain a foamed porous molded article using a polytetrafluoroethylene resin as the only resin and using a foaming agent in accordance with the prior art, the bubbles formed escape out of the molded article and substantially no foamed porous molded article made of the polytetrafluoroethylene resin can be obtained or, if obtained, the molded article is believed to be very low in bubble content and rough on the surface and/or inferior in dimensional stability, for example irregular in cord diameter.

The porous polytetrafluoroethylene molded article of the invention or the foamed porous polytetrafluoroethylene molded article of the invention is low in relative permittivity and superior in dimensional stability and therefore can be suitably used as a product for high-frequency signal transmission.

Such a product for high-frequency signal transmission which is obtained by using the porous polytetrafluoroethylene molded article of the invention or the foamed porous polytetrafluoroethylene molded article of the invention also constitutes an aspect of the present invention.

The product for high-frequency signal transmission according to the invention may comprise the foamed porous polytetrafluoroethylene molded article of the invention generally as an insulator.

Such product for high-frequency signal transmission is not particularly restricted but may be any of the products used for transmitting high-frequency signals, including (I) insulating boards of high-frequency circuits, terminal boards of electric parts, insulators in connecting parts and printed wiring boards and like molded boards, (II) high-frequency vacuum tube bases, antenna covers and like molded products, and (III) insulated wires such as high-frequency transmission cables and coaxial feeders.

Among the molded boards (I) mentioned above, printed wiring boards are preferred since good electric characteristics and thermal stability can be utilized therein.

The printed wiring boards are not particularly restricted but include, among others, printed wiring boards for electronic circuits for use in cellular phones, various computers, communication devices and so forth.

Among the above-mentioned molded products (II), antenna covers are preferred from the viewpoint that excellent weather resistance and mechanical strength can be obtained.

The method of molding processing into the molded boards (I) or molded products (II) is not particularly restricted but mention may be made of, for example, the method described hereinabove referring to the various products for high-frequency signal transmission.

High-frequency transmission cables are preferred as the above-mentioned insulated wires (III) from the viewpoint that good thermal stability and electric characteristics can be obtained, and coaxial cables and cables for LAN, among others, are preferred as the high-frequency transmission cables.

The morphology of the coaxial cables is the same as described hereinabove referring to the various products for high-frequency signal transmission.

As the method of producing the high-frequency transmission cables, there may be mentioned, for example, the above-mentioned methods known in the art.

In the practice of the invention, the above-mentioned high-frequency transmission cables may comprise the foamed porous polytetrafluoroethylene molded article of the invention as an insulating coating layer.

The method of molding processing into the above-mentioned insulating coating layer is not particularly restricted but includes, among others, the extrusion coating molding technique, wrapping tape technique, calendering rolling technique and like techniques. The extrusion coating molding technique is preferred as the method of molding processing, and the paste extrusion molding is preferred as the extrusion coating molding technique.

As the method of paste extrusion molding, there may be mentioned, for example, the method comprising the same procedure as mentioned hereinabove except that the above-mentioned molding material is used in lieu of the mixed polytetrafluoroethylene powder of the invention.

### EFFECTS OF THE INVENTION

The porous polytetrafluoroethylene molded article of the invention and the foamed porous polytetrafluoroethylene molded article of the invention, which have the constitutions respectively described hereinabove, are low in relative permittivity and dielectric loss tangent and can show dimensional stability, with respect to cord diameter, for instance, and stable impedance.

The product for high-frequency signal transmission according to the invention realizes an increased rate of transmission by using polytetrafluoroethylene resins.

The mixed polytetrafluoroethylene powder of the invention can be suitably used as a material for the porous polytetrafluoroethylene molded article mentioned above.

### BEST MODES FOR CARRYING OUT THE INVENTION

The following example illustrates the present invention in further detail. This example is, however, by no means limitative of the scope of the invention.

In the example, the molded article obtained was evaluated by the following methods.
(1) Outside diameter: The cable obtained was cut perpendicularly to the peripheral direction, and the cut surface was measured.
(2) Melt viscosity: The value at a temperature higher by 30ºC than the melting point of the measurement target resin was measured using a dynamic viscoelasticity measuring apparatus (trademark: PDS-II, product of Rheometrix).
(3) Melting temperature: This was determined by measuring the endothermic peak under the temperature programming condition of 10ºC/minute using a differential scanning calorimeter (RDC220; product of Seiko Denshi Kogyo).
(4) Relative permittivity: The changes in resonance frequency and Qu value (electric field intensity) were measured at a temperature of 20 to 25ºC by the cavity resonator method using a network analyzer (HP8510C; product of Hewlett Packard), and the value at 12 GHz was calculated.
(5) Specific gravity: This was measured by the water displacement method according to ASTM D-792.

### Example 1

One kilogram of a PTFE resin molding powder (TFE homopolymer, SSG 2.155, primary maximum endothermic peak temperature 340ºC) was spread on a stainless steel tray to a thickness of 200 mm and sintered in an electric oven at 380ºC for 5 hours to give lumps of the PTFE resin.

The PTFE resin lumps obtained were ground to an average particle diameter of 50 *µ*m using a pulverizer to give a ground powder (hereinafter referred to as "gelified powder").

A 160-g portion of the gelified powder obtained (secondary maximum endothermic peak temperature 327ºC), 640 g of a PTFE resin fine powder (SSG 2.160, primary maximum endothermic peak temperature 339ºC) and 136 g of an extrusion auxiliary (trademark: Isopar G, product of Exxon Shell) were placed in a 5-liter polyethylene bottle and mixed up by rotating the bottle for 10 minutes. The mixture was allowed to stand in the polyethylene bottle at 25ºC for 12 hours for maturation. Thus, 800 g of a mixed powder comprising the PTFE resin fine powder and gelified powder (PTFE resin fine powder: gelified powder = 77:23 by mass) was obtained.

The mixed powder obtained was preformed in a preforming machine at a pressure of 3 MPa for 15 minutes and then molded into an insulating coating material using a paste extruder (cylinder diameter 38 mm, mandrel diameter 16 mm, product of Jennings) and using an AWG19 (diameter 0.91 mm) of SPCW (silver-plated copper clad steel wire) as the core wire and a cylindrical mold with a diameter of 3.18 mm at a take-up speed of 3 m/minute. Just after extrusion, the insulating coating material had an outside diameter of 3.31 mm.

The insulating coating material obtained was then dried in a drying oven set at 130ºC and 190ºC for about 1 minute and then sintered in a constant-temperature vessel at a temperature of 420ºC for 1 minute to give a coated wire for coaxial cable manufacture.

The thus-obtained coated wire for coaxial cable manufacture was evaluated; the outside diameter was 2.95 mm, the specific gravity was 1.662, and the relative permittivity was 1.6.

### INDUSTRIAL APPLICABILITY

The porous polytetrafluoroethylene molded article of the invention and the foamed porous polytetrafluoroethylene molded article of the invention, which have the constitutions respectively described hereinabove, are low in relative permittivity and dielectric loss tangent and can show dimensional stability, with respect to cord diameter, for instance, and stable impedance.

The product for high-frequency signal transmission according to the invention realizes an increased rate of transmission by using polytetrafluoroethylene resins.

The mixed polytetrafluoroethylene powder of the invention can be suitably used as a material for the porous polytetrafluoroethylene molded article mentioned above.

## Claims

1. A porous polytetrafluoroethylene molded article,
wherein the specific gravity of said porous polytetrafluoroethylene molded article is 0.9 to 2.0 and the aspect ratio of a void formed within said molded article is not lower than 1 but not higher than 3.

2. A mixed polytetrafluoroethylene powder, which comprises
a polytetrafluoroethylene resin (A) having a maximum peak temperature of 333 to 347ºC on the endothermic curve appearing on the crystal melting curve measured by a differential scanning calorimeter and a standard specific gravity of 2.12 to 2.20 and
a polytetrafluoroethylene resin (B) having a maximum peak temperature of 324 to 330ºC on the endothermic curve appearing on the crystal melting curve measured by said differential scanning calorimeter and a standard specific gravity of 2.12 to 2.20.

3. The mixed polytetrafluoroethylene powder according to Claim 2,
which is obtained by cocoagulation of an aqueous dispersion of a particle comprising the polytetrafluoroethylene resin (A) dispersed in an aqueous medium and a powder comprising the polytetrafluoroethylene resin (B).

4. A porous polytetrafluoroethylene molded article obtained by using the mixed polytetrafluoroethylene powder according to Claim 2 or 3,
wherein the specific gravity of said porous polytetrafluoroethylene molded article is 0.9 to 2.0 and the aspect ratio of a void formed within said molded article is not lower than 1 but not higher than 3.

5. A method of producing the porous polytetrafluoroethylene molded article according to Claim 1 or 4 comprising carrying out a molding processing using a mixed polytetrafluoroethylene powder,
wherein said mixed polytetrafluoroethylene powder comprises a polytetrafluoroethylene resin (A) having a maximum peak temperature of 333 to 347ºC on the endothermic curve appearing on the crystal melting curve measured by a differential scanning calorimeter and a standard specific gravity of 2.12 to 2.20 and
a polytetrafluoroethylene resin (B) having a maximum peak temperature of 324 to 330ºC on the endothermic curve appearing on the crystal melting curve measured by said differential scanning calorimeter and a standard specific gravity of 2.12 to 2.20,
said molding processing comprises a step of sintering at a temperature not lower than the melting point of said polytetrafluoroethylene resin (A).

6. A foamed porous polytetrafluoroethylene molded article comprising a polytetrafluoroethylene resin (P) and a thermoplastic resin (Q) having a melt viscosity at 350ºC of not higher than 5000000 Pa·s,
wherein the specific gravity of said foamed porous polytetrafluoroethylene molded article is 0.8 to 1.9 and the aspect ratio of a void formed within said molded article is not lower than 1 but not higher than 3.

7. The foamed porous polytetrafluoroethylene molded article according to Claim 6,
wherein the thermoplastic resin (Q) is a fluororesin or a polyolefin resin.

8. The foamed porous polytetrafluoroethylene molded article according to Claim 6 or 7,
which is obtained by using a molding material comprising the polytetrafluoroethylene resin (P), the thermoplastic resin (Q) and, further, a foaming agent.

9. A method of producing the foamed porous polytetrafluoroethylene molded article according to Claim 6, 7 or 8,
wherein said method of producing the foamed porous polytetrafluoroethylene molded article comprises carrying out a molding processing using the polytetrafluoroethylene resin (P) and the thermoplastic resin (Q) having a melt viscosity at 350ºC of not higher than 5000000 Pa·s at a temperature not lower than the melting point of said polytetrafluoroethylene resin (P).

10. A product for high-frequency signal transmission, which is obtained by using the porous polytetrafluoroethylene molded article according to Claim 1 or 4 or the foamed porous polytetrafluoroethylene molded article according to Claim 6, 7 or 8.

11. The product for high-frequency signal transmission according to Claim 10,
which is a high-frequency transmission cable.

12. The product for high-frequency signal transmission according to Claim 10,
which is a printed wiring board.

13. The product for high-frequency signal transmission according to Claim 10,
which is an antenna cover.

14. A filter which is obtained by using the porous polytetrafluoroethylene molded article according to Claim 1, 4 or 5.
